# EUROPÄISCHE PATENTSCHRIFT

(11) **EP 2 559 128 B1**
(45) Veröffentlichungstag und Bekanntmachung des Hinweises auf die Patenterteilung: **04.03.2020**
(21) Anmeldenummer: 11709438.3
(22) Anmeldetag: 23.03.2011
(51) Int. Cl.: H02J 3/00, H02J 3/32, B60K 1/00, B60L 58/12, B60L 55/00

(54) **VERFAHREN UND VORRICHTUNG ZUM ERMITTELN EINER ÜBERSCHÜSSIGEN ENERGIEMENGE EINES ELEKTRISCHEN ENERGIESPEICHERS EINES FAHRZEUGS**
METHOD AND DEVICE FOR DETERMINING EXCEEDING ENERGY OF AN ENERGY STORAGE DEVICE IN A VEHICLE
PROCÉDÉ ET DISPOSITIF DE DÉTERMINATION D'ÉNERGIE SUPERFLUE D'UN ACCUMULATEUR D'ÉNERGIE DANS UN VÉHICULE

(30) Priorität: 15.04.2010 DE 102010027793
(43) Veröffentlichungstag der Anmeldung: 20.02.2013
(73) Patentinhaber: Robert Bosch GmbH, 70442 Stuttgart (DE)
(72) Erfinder: DUCKECK, Ralf, 31137 Hildesheim (DE)
(86) Internationale Anmeldenummer: PCT/EP2011/054421
(87) Internationale Veröffentlichungsnummer: WO 2011/141214

(56) Entgegenhaltungen:
- US-A1- 2005 127 855
- US-A1- 2008 039 989
- US-A1- 2009 210 357
- US-A1- 2009 229 900

## Beschreibung

### Stand der Technik

Die vorliegende Erfindung bezieht sich auf ein Verfahren zum Ermitteln einer überschüssigen Energiemenge eines elektrischen Energiespeichers eines Fahrzeugs, auf eine entsprechende Vorrichtung sowie auf ein entsprechendes Computerprogrammprodukt.

In der modernen Energiewirtschaft wird heutzutage immer mehr sogenannter grüner Strom aus Windkraft, Wasserkraft oder durch Photovoltaik erzeugt. Es besteht auch immer mehr Nachfrage nach grünem Strom, um die Umweltbilanz zu verbessern. Bei solchen Systemen wird konventioneller Strom, beispielsweise aus Kernenergie oder Kohlekraftwerken, bereitgehalten, da der grüne Strom, insbesondere aus Wind und Photovoltaik, nicht dauerhaft gleichmäßig zur Verfügung steht, z.B. bei Windstille oder Regenwetter. Eine Speicherung ist nur schwierig unter hohen Kosten möglich, da dafür sehr große Mengen teurer Akkumulatoren zur Verfügung stehen müssten.

Im onside-Artikel "Unsere Autos sind das Relikt einer Überflussgesellschaft" http.//www.i-sh.org/ish/onside/artikel/2008111/1849.php wird beschrieben, dass Autos als Energiespeicher dienen können.

US 2009/0229900 A1 beschreibt ein Hybridfahrzeug mit einer Batterie. Wenn die Batterie an ein Stromnetz angeschlossen wird, kann sie genutzt werden, um überschüssige Energie aus dem Stromnetz aufzunehmen oder benötigte Energie and das Stromnetz abzugeben. Um das Stromnetz optimal unterstützen zu können, wird während der Fahrt des Hybridfahrzeugs ermittelt, ob das Stromnetz zu einer prognostizierten Anschlusszeit des Hybridfahrzeugs an das Stromnetz Energie abzugeben hat oder Energie benötigt.

### Offenbarung der Erfindung

Vor diesem Hintergrund wird mit der vorliegenden Erfindung ein Verfahren zum Ermitteln einer überschüssigen Energiemenge eines elektrischen Energiespeichers eines Fahrzeugs, weiterhin eine Vorrichtung, die dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass beispielsweise mit Hilfe eines Navigationssystems und eines Terminplaners ein zukünftiger Energieverbrauch eines Fahrzeugs ermittelt werden kann. Der zukünftige Energieverbrauch kann beispielsweise den Energieverbrauch des Fahrzeugs für einen Tag oder für eine Fahrt abdecken. Basierend auf dem zukünftigen Energieverbrauch kann eine rückspeisbare Energie bestimmt werden. Die rückspeisbare Energie kann beispielsweise in ein Versorgungsnetz zurückgespeist werden.

Der erfindungsgemäße Ansatz macht sich zu Nutze, dass es in den nächsten Jahren immer mehr Fahrzeuge mit reinem Elektroantrieb oder mit Hybrid-Antrieb aus Elektromotor und Verbrennungsmotor geben wird. Beide Systeme werden die Anzahl an Strom-Speichern in Kraftfahrzeugen zukünftig drastisch erhöhen. Die reine Nutzung solcher Akkus verbessert allerdings noch nicht die reelle CO2-Bilanz für das Kraftfahrzeug, da der Strom ja auch unter Verwendung fossiler Energie, beispielsweise aus einem Energiemix aus fossiler Energie und grüner Energie, produziert werden muss.

Allerdings werden Kraftfahrzeuge in der überwiegenden Mehrheit der Zeit nicht benutzt, sondern stehen irgendwo, z.B. in der Garage oder auf dem Firmenparkplatz. Im Falle von Elektro- oder Hybrid-Fahrzeugen werden sie in dieser Zeit an das Strom-Netz angeschlossen, um die Energiespeicher aufzuladen. Dieser Ladevorgang ist üblicherweise in wenigen Stunden erledigt. Danach hängt das Fahrzeug mit vollen Akkumulatoren viele Stunden am Netz, ohne dass die vorhandene Energie benutzt wird.

Diese Energie kann bei Bedarf als Pufferenergie für grünen Strom genutzt werden und bei Bedarf in das Netz zurückgespeist werden, wenn beispielsweise aufgrund von ungünstigen Wetterbedingungen mehr Strom benötigt wird, aber nicht ausreichend grüner Strom produziert wird. So können insbesondere Nachts, wenn die meisten Autos am Stromnetz hängen, die fehlenden Strommengen für Photovoltaikanlagen geliefert werden, da dort dann ja kein Strom produziert wird. Damit würde gleichzeitig die CO2-Bilanz der Elektroautos nochmals verbessert werden, da sie mehr grünen Strom von anderen Fahrzeugen dazu bekommen können.

Gemäß der Ausführungsform können solche Rückspeisesysteme mit der Fahrzeugnavigation verbunden werden. Der Fahrzeugnavigation kann mitgeteilt werden, wann die nächste Fahrt stattfindet und wohin sie führen soll. Damit kann die Fahrzeugnavigation festlegen, wie viel Energie dafür benötigt wird und kann somit bei Bedarf risikolos die überschüssige Menge an gespeicherter Energie an das Netz zurückgeben.

Der erfindungsgemäße Ansatz ermöglicht eine Ausnutzung existierender Speicherkapazität für reinen grünen Strom. Dabei ist eine kostengünstige Speicherung von grünem Strom ohne zusätzliche Infrastruktur gegeben. Dies führt auch zu einer Erhöhung der Akzeptanz für reinen grünen Strom und zu einer Verbesserung der Energiewirtschaft und CO2-Bilanz, insbesondere beim Einsatz im Automobil.

Die vorliegende Erfindung schafft ein Verfahren zum Ermitteln einer überschüssigen Energiemenge eines elektrischen Energiespeichers eines Fahrzeugs, die einem Versorgungsnetz zur Verfügung gestellt werden kann, das folgende Schritte umfasst: Ermitteln einer aktuellen Energiemenge des Energiespeichers; Ermitteln einer für eine bevorstehende Nutzung des Fahrzeugs benötigten Energiemenge, ansprechend auf eine Information über die bevorstehende Nutzung; und Ermitteln der überschüssigen Energiemenge des Energiespeichers, basierend auf der aktuellen Energiemenge und der benötigten Energiemenge.

Bei dem Fahrzeug kann es sich um ein Kraftfahrzeug mit Elektroantrieb oder Hybridantrieb handeln. Der elektrische Energiespeicher kann ausgebildet sein, um elektrische Energie zu speichern und zum Antrieb des Fahrzeugs zur Verfügung zu stellen. Bei dem Energiespeicher kann eine oder mehrere Batterien oder Akkumulatoren umfassen. Der Energiespeicher kann eine Schnittstelle zu einem elektrischen Versorgungsnetz aufweisen, so dass elektrische Energie aus dem Versorgungsnetz in den Energiespeicher geladen werden kann und umgekehrt aus dem Energiespeicher in das Versorgungsnetz rückgespeist werden kann. Die aktuelle Energiemenge kann den aktuellen Ladezustand des Energiespeichers bezeichnen. Die Energiemenge kann beispielsweise den Energiegehalt in Amperestunden (Ah) definieren. Während der bevorstehenden Nutzung des Fahrzeugs wird Energie aus dem Energiespeicher entnommen. Die bevorstehende Nutzung kann eine oder mehrere geplante Fahrten des Fahrzeugs umfassen. Insbesondere kann die bevorstehende Nutzung eine Nutzungsdauer des Fahrzeugs umfassen, während der kein oder nur ein unbedeutendes erneutes Aufladen des Energiespeichers möglich ist. Somit ist es erforderlich, dass die für die bevorstehende Nutzung benötigte Energiemenge vor Beginn der bevorstehenden Nutzung des Fahrzeugs im Energiespeicher gespeichert ist. Die Information über die bevorstehende Nutzung kann einen Wert der für die bevorstehende Nutzung benötigten Energiemenge umfassen. Alternativ kann die Information über die bevorstehende Nutzung charakteristische Daten der bevorstehenden Nutzung umfassen, aus denen wiederum die benötigte Energiemenge bestimmt werden kann. Die Information über die bevorstehende Nutzung kann auf Daten basieren, die von einem Nutzer des Fahrzeugs zur Verfügung gestellt werden. Die Daten können beispielsweise Informationen über geplante Fahrten umfassen. Die überschüssige Energiemenge kann eine in dem Energiespeicher aktuell vorhandene Energiemenge bezeichnen, die für die bevorstehende Nutzung des Fahrzeugs nicht benötigt wird. Beispielsweise kann die überschüssige Energiemenge als Differenz zwischen der aktuellen Energiemenge und der benötigten Energiemenge ermittelt werden. In einem Schritt des Bereitstellens kann die überschüssige Energiemenge an das Versorgungsnetz bereitgestellt werden. Die überschüssige Energiemenge kann somit als Puffer für das Versorgungsnetz eingesetzt werden, ohne dass die bevorstehende Nutzung des Fahrzeugs gefährdet wird.

Gemäß der Ausführungsform kann die Information über die bevorstehende Nutzung von einem Fahrzeugnavigationssystem bereitgestellt werden. Dazu kann der Energiespeicher oder eine Steuereinrichtung des Energiespeichers eine Schnittstelle zu dem Fahrzeugnavigationssystem aufweisen. Über die Schnittstelle kann die Information über die bevorstehende Nutzung bereitgestellt werden. Das Fahrzeugnavigationssystem kann ausgebildet sein, um die Information über die bevorstehende Nutzung basierend auf bevorstehenden Informationen zu bestimmen, die beispielsweise von einem Nutzer des Fahrzeugs in das Fahrzeugnavigationssystem eingegeben wurden. Beispielsweise kann der Nutzer einen Startpunkt, Zielpunkt und eine Abfahrtszeit bezüglich einer durchzuführenden Fahrt eingeben. Basierend auf einer digitalen Karte kann das Fahrzeugnavigationssystem eine Fahrtstrecke, eine Fahrtdauer und einen Energiebedarf der durchzuführenden Fahrt bestimmen. In die Bestimmung des Energiebedarfs können Informationen über Straßenklassen, eine bekannte Fahrweise des Nutzers das Fahrzeug sowie ein bekannter Energieverbrauch des Fahrzeugs einfließen. Somit kann das Fahrzeugnavigationssystem ausgebildet sein, um basierend auf einer eingegebenen Startinformation und einer eingegebenen Zielinformation einer oder mehrere bevorstehenden Fahrten, die für die bevorstehende Nutzung benötigten Energiemenge zu ermitteln und mit der Information über die bevorstehende Nutzung bereitzustellen. Die Verbindung zwischen Fahrzeugnavigationssystem und Energiespeicher kann einfach realisiert werden und bietet eine sichere Möglichkeit um den zukünftigen Energiebedarf abzuschätzen. Das Fahrzeugnavigationssystem kann auch Informationen über mögliche Ladestationen für den Energiespeicher umfassen. Somit kann die benötigte Energiemenge für diejenigen Fahrten bestimmt werden, die durchgeführt werden, bis das Fahrzeug eine Ladestation erreicht und dort eine Verweildauer hat, die ausreicht, um den Energiespeicher für die darauf folgenden Fahrten nachzuladen.

Ansprechend auf das Ermitteln der überschüssigen Energiemenge kann ein Steuersignal bereitgestellt werden, das ausgebildet ist, um den Energiespeicher abhängig von der ermittelten Energiemenge in einen Ladezustand oder einen Entladezustand zu versetzen. Beispielsweise kann der Energiespeicher in den Ladezustand versetzt werden oder in dem Ladezustand versetzt bleiben, wenn die benötigte Energiemenge größer als die aktuelle Energiemenge ist. Dies bedeutet, dass der Energiespeicher weiter aufgeladen werden kann, zumindest bis die aktuelle Energiemenge der benötigten Energiemenge entspricht. Ist die benötigte Energiemenge kleiner als die aktuelle Energiemenge, so kann der Energiespeicher überschüssige Energie an das Versorgungsnetz zurück speisen. Dazu kann der Energiespeicher in den Entladezustand versetzt werden. Die Rückspeisung in das Versorgungsnetz kann automatisch erfolgen, beispielsweise wenn ein Einbruch der Spannung im Versorgungsnetz erkannt wird. Alternativ kann die Rückspeisung ansprechend auf eine empfangene Anfrage des Versorgungsnetzes erfolgen.

Gemäß der Ausführungsform kann die Information über die bevorstehende Nutzung eine Abfahrtzeit einer bevorstehenden Fahrt umfassen. Auf diese Weise kann eine Zeitdauer zwischen der Abfahrtszeit und der aktuellen Zeit bestimmt werden, nach der die benötigte Energiemenge im Energiespeicher zur Verfügung stehen muss.

In diesem Fall kann das erfindungsgemäße Verfahren einen Schritt des Ermitteins einer minimalen Energiemenge umfassen, die um eine Differenzmenge kleiner als die benötigte Energiemenge ist und an das Versorgungsnetz bereitgestellt werden kann. Dabei kann die minimale Energiemenge so ermittelt werden, dass dem Energiespeicher die Differenzmenge bis zur Abfahrtzeit wieder zugeführt werden kann. Dies ermöglicht es, sofern die Nutzung des Fahrzeugs nicht unmittelbar bevorsteht, dass der Energiespeicher unterhalb der benötigten Energiemenge entlassen werden kann. Dies erhöht die Pufferleistung des Energiespeicher. Basierend auf einer bekannten Ladegeschwindigkeit kann die Entladung rechtzeitig gestoppt werden und mit einer erneuten Energieeinspeisung in den Energiespeicher begonnen werden, damit der Energiespeicher rechtzeitig zum Beginn der Nutzung die benötigte Energiemenge umfasst.

Die vorliegende Erfindung schafft ferner eine Vorrichtung zum Ermitteln einer überschüssigen Energiemenge eines elektrischen Energiespeichers eines Fahrzeugs, die einem Versorgungsnetz zur Verfügung gestellt werden kann, das die folgenden Merkmale umfasst: einer Einrichtung zum Ermitteln einer aktuellen Energiemenge des Energiespeichers; einer Einrichtung zum Ermitteln einer für eine bevorstehende Nutzung des Fahrzeugs benötigten Energiemenge, ansprechend auf eine Information über die bevorstehende Nutzung; und einer Einrichtung zum Ermitteln der überschüssigen Energiemenge des Energiespeichers, basierend auf der aktuellen Energiemenge und der benötigten Energiemenge.

Die Vorrichtung kann Teil einer Steuereinrichtung zum Steuern des Ladezustands des Energiespeichers oder Teil eines Navigationssystems des Fahrzeugs sein. Die Vorrichtung kann ausgebildet sein, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Signale verarbeitet und in Abhängigkeit davon Steuersignale ausgibt. Die Vorrichtung kann Schnittstellen aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einer der vorstehend beschriebenen Ausführungsformen verwendet wird, wenn das Programm auf einem Steuergerät ausgeführt wird.

Das Computerprogrammprodukt oder der Programmcode kann auch von einem Server über eine Datenverbindung, beispielsweise über Internet downgeloaded und in einem Programmspeicher einer entsprechenden Vorrichtung, insbesondere einem Fahrzeugsteuergerät, abgelegt werden, um dort das erfindungsgemäße Verfahren zu realisieren.

Die Erfindung wird nachstehend anhand der beigefügten Zeichnungen beispielhaft näher erläutert. Es zeigen:
- Fig. 1: ein Ablaufdiagramm des Ausführungsbeispiels der vorliegenden Erfindung;
- Fig. 2: eine schematische Darstellung des erfindungsgemäßen Ansatzes; und
- Fig. 3: ein Blockschaltbild des Ausführungsbeispiels der vorliegenden Erfindung.

In der nachfolgenden Beschreibung des Ausführungsbeispiels der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

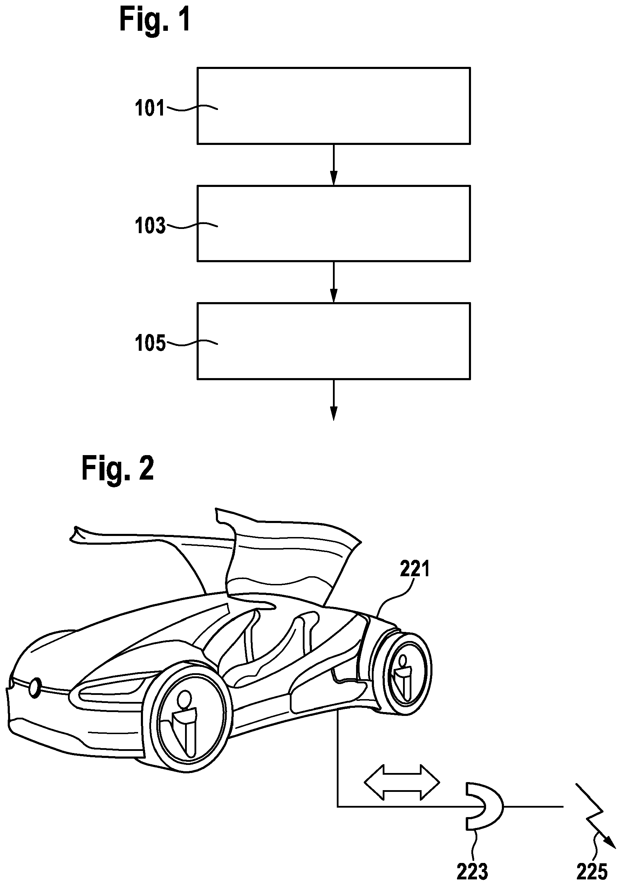

Fig. 1 zeigt ein Ablaufdiagramm eines Verfahrens zum Ermitteln einer überschüssigen Energiemenge eines elektrischen Energiespeichers eines Fahrzeugs, gemäß dem Ausführungsbeispiel der vorliegenden Erfindung.

In einem Schritt 101 wird eine aktuelle Energiemenge des Energiespeichers ermittelt. Bei der aktuellen Energiemenge kann es sich um die gegenwärtig in dem Energiespeicher gespeicherte elektrische Ladung handeln. Die aktuelle Energiemenge kann mittels bekannter Messverfahren, die beispielsweise eine Strommessung und eine Spannungsmessung umfassen können, ermittelt werden. In einem Schritt 103 kann eine für eine bevorstehende Nutzung des Fahrzeugs benötigte Energiemenge bestimmt werden. Dies kann ansprechend auf eine Information über die bevorstehende Nutzung erfolgen. Die Information über die bevorstehende Nutzung kann ansprechend auf eine Anfrage bereitgestellt werden, oder beispielsweise aufgrund einer Handlung eines Nutzers des Fahrzeugs erfolgen. Die benötigte Energiemenge kann so ermittelt werden, dass in dem Energiespeicher genügend elektrische Energie gespeichert ist, um die bevorstehende Nutzung des Fahrzeugs durchführen zu können, ohne dass ein zwischenzeitliches Wiederaufladen des Energiespeichers erforderlich ist. Handelt es sich bei der bevorstehende Nutzung um eine einzelne Fahrt des Fahrzeugs, so kann die benötigte Energiemenge der Energiemenge entsprechen, die von dem Fahrzeug während der einzelnen Fahrt verbraucht wird. Zusätzlich kann die benötigte Energiemenge eine Reserve umfassen. Umfasst die Information über die bevorstehende Nutzung bereits die benötigte Energiemenge, so sind keine weiteren Berechnungen erforderlich. Alternativ kann die Information über die bevorstehende Nutzung lediglich charakteristische Daten der bevorstehenden Nutzung umfassen. In diesem Fall, kann die benötigte Energiemenge aus den charakteristischen Daten berechnet werden. Dabei kann sowohl eine während der bevorstehenden Nutzung zurückzulegende Fahrtstrecke, Fahrzeit sowie ein typischer Energieverbrauch des Fahrzeugs auf den zurückzulegenden Fahrstrecken berücksichtigt werden. In einem Schritt 115 kann basierend auf der aktuellen Energiemenge und der benötigten Energiemenge eine überschüssige Energiemenge ermittelt werden. Dazu kann eine Differenz aus der aktuellen Energiemenge und der benötigten Energiemenge berechnet werden. Ist die aktuelle Energiemenge kleiner als die benötigte Energiemenge, so ist keine überschüssige Energiemenge vorhanden. Ist die aktuelle Energiemenge dagegen größer als die benötigte Energiemenge, so kann die daraus resultierende überschüssige Energiemenge von dem Energiespeicher bereitgestellt werden, und beispielsweise in das Versorgungsnetz zurück gespeist werden, aus dem der Energiespeicher zuvor geladen wurde.

Die Information über die bevorstehende Nutzung kann beispielsweise von einem Navigationssystem des Fahrzeugs und einem Terminplaner bereitgestellt werden. Der Terminplaner kann Informationen über Zeitpunkte durchzuführender Fahrten umfassen. Das Navigationssystem kann den durchzuführenden Fahrten zugeordnete Fahrstrecken umfassen oder ermitteln. Zusätzlich kann das Navigationssystem Randbedingungen umfassen, aus denen der Energieverbrauch des Fahrzeugs auf den durchzuführenden Fahrten abgeschätzt werden kann. Die Randbedingungen können in dem Navigationssystem gespeichert sein oder von einem Nutzer bereitgestellt werden.

Der Ladezustand des Energiespeichers kann von einem Ladegerät überwacht werden. Das Ladegerät kann ausgebildet sein, um den Energiespeicher elektrische Energie, beispielsweise elektrischen Strom aus dem Versorgungsnetz zuzuführen, wenn die benötigte Energiemenge größer als die aktuelle Energiemenge ist. Im Gegenzug kann das Ladegerät auch ausgebildet sein, um eine Entladung des Energiespeichers zu ermöglichen und dadurch elektrische Energie in das Versorgungsnetz zurück zu speisen. Gemäß einem Ausführungsbeispiel kann das Ladegerät auch ausgebildet sein, um eine Entladung des Energiespeichers unter die benötigte Energiemenge zu ermöglichen, sofern anschließend bis zur bevorstehende Nutzung des Fahrzeugs noch genügend Zeit verbleibt, um den Energiespeicher wieder auf die benötigte Energiemenge aufzuladen. Dazu kann das Ladegerät auf gespeicherte Daten bezüglich einer Ladegeschwindigkeit des Energiespeichers zurückgreifen.

Fig. 2 zeigt das Ausführungsbeispiel der vorliegenden Erfindung mit einem Kraftfahrzeug 221 als mobilen Energiespeicher für grünen Strom. Das Fahrzeug 221 ist über eine Leitung mit einer Steckdose 223 verbunden. Über die Steckdose 223 ist das Fahrzeug 221 und insbesondere ein Energiespeicher, der in dem Fahrzeug 221 angeordnet ist, mit einem Versorgungsnetz 225 verbunden. Bei dem Versorgungsnetz kann es sich um ein überörtliches elektrisches Leitungsnetz eines Energieversorgers handeln. Wie es durch einen Doppelpfeil angedeutetes, ist ein Stromfluss sowohl in Richtung des Fahrzeugs 221 als auch in Richtung des Versorgungsnetzes 221 möglich. Dies bedeutet, dass der Energiespeicher des Fahrzeugs 221 Energie aus dem Versorgungsnetz 225 entnehmen kann und somit aufgeladen wird. Ebenso ist es möglich, dass der Energiespeicher des Fahrzeugs 221 Energie an das Versorgungsnetz 225 zurückgespeist und dabei entladen wird. Wird überschüssige Energie an das Versorgungsnetz 225 zurück gespeist, so kann die überschüssige Energie von dem Versorgungsnetz 225 an weitere, nicht gezeigte Verbraucher, die mit dem Versorgungsnetz zu 120 verbunden sind, bereitgestellt werden. Somit fungiert der Energiespeicher des Fahrzeugs zu 121 als Pufferspeicher für das Versorgungsnetz 225.

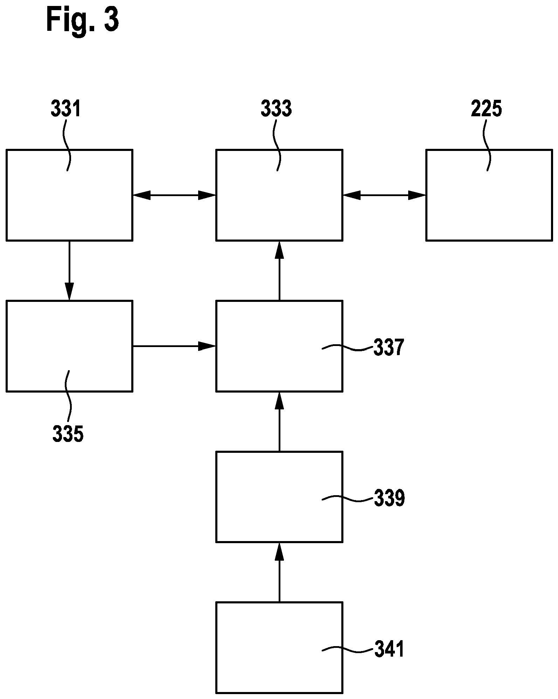

Fig. 3 zeigt ein Blockschaltbild einer Vorrichtung zum Ermitteln einer überschüssigen Energiemenge eines elektrischen Energiespeichers eines Fahrzeugs, gemäß einem Ausführungsbeispiel der vorliegenden Erfindung. Gezeigt ist ein elektrischer Energiespeicher 331, der beispielsweise in dem in Fig. 2 gezeigten Fahrzeug 221 angeordnet sein kann. Der Energiespeicher 331 kann über eine Ladeeinrichtung 333 geladen beziehungsweise entladen werden. Dazu ist die Ladeeinrichtung 333 mit einem Versorgungsnetz 225 gekoppelt. Mittels einer Einrichtung 335 kann eine aktuelle Energiemenge oder ein aktueller Ladezustand des Energiespeichers 331 ermittelt werden und eine entsprechende Information darüber an einer Einrichtung 337 zum Ermitteln einer überschüssigen Energiemenge des Energiespeichers bereitgestellt werden. In einer Einrichtung 339 kann eine für eine bevorstehende Fahrt oder Nutzung des Fahrzeugs benötigte Energiemenge ermittelt werden. Dazu kann die Einrichtung 339 eine Information über die bevorstehende Fahrt oder Nutzung von einer Einrichtung 341 empfangen. Die Einrichtung 341 kann ein Navigationssystem mit einer Benutzerschnittstelle darstellen. Die Einrichtung 339 ist ausgebildet, um basierend auf der Information über die bevorstehende Fahrt oder Nutzung, eine für die bevorstehende Fahrt oder Nutzung benötigte Energiemenge des Fahrzeugs, die von dem Energiespeicher 331 während der Fahrt oder Nutzung bereitzustellen ist, zu ermitteln. Ferner ist die Einrichtung 339 ausgebildet, um eine Information über die benötigte Energiemenge an die Einrichtung 337 bereitzustellen. Die Einrichtung 337 ist ausgebildet, um basierend auf den Informationen über die aktuelle Energiemenge und die benötigte Energiemenge, eine überschüssige Energiemenge zu ermitteln. Die Einrichtung 337 ist gemäß diesem Ausführungsbeispiel ausgebildet, um die Ladeeinrichtung 333 anzusteuern. Sofern eine überschüssige Energiemenge in dem Energiespeicher 331 vorhanden ist, kann die Ladeeinrichtung 333 eine Entladung des Energiespeichers 331 in das Versorgungsnetz 225 ermöglichen. In diesem Fall kann der Energiespeicher 331 elektrische Ladung in das Versorgungsnetz 225 zurückspeisen. Sofern keine überschüssige Energiemenge vorhanden ist, kann die Ladeeinrichtung 333 eine Ladung des Energiespeichers 331 mit Energie aus dem Versorgungsnetz bewirken. Gemäß einer Ausführungsform ist auch eine Entladung des Energiespeichers 331 unterhalb der benötigten Energiemenge möglich, wenn sichergestellt ist, dass die benötigte Energiemenge rechtzeitig vor Beginn der Nutzung wieder zur Verfügung stehen wird.

## Patentansprüche

1. Verfahren zum Ermitteln einer überschüssigen Energiemenge eines elektrischen Energiespeichers (331) eines Fahrzeugs (221), die einem Versorgungsnetz (225) zur Verfügung gestellt werden kann, das folgende Schritte umfasst:
Ermitteln (101) einer aktuellen Energiemenge des Energiespeichers;
Ermitteln (103) einer für eine bevorstehende Nutzung des Fahrzeugs benötigten Energiemenge, ansprechend auf eine Information über die bevorstehende Nutzung, **dadurch gekennzeichnet, dass** die Information über die bevorstehende Nutzung von einem Fahrzeugnavigationssystem (341) bereitgestellt wird, das ausgebildet ist, unter Verwendung einer digitalen Karte, einer eingegebenen Startinformation und einer eingegebenen Zielinformation einer oder mehrere bevorstehenden Fahrten, die für die bevorstehende Nutzung benötigte Energiemenge zu ermitteln und mit der Information über die bevorstehende Nutzung bereitzustellen, wobei in einem Schritt des Ermitteins (105) die überschüssige Energiemenge des Energiespeichers basierend auf der aktuellen Energiemenge und der benötigten Energiemenge ermittelt wird, wobei die überschüssige Energiemenge als Differenz zwischen der aktuellen Energiemenge und der benötigten Energiemenge ermittelt wird.

2. Verfahren gemäß einem der vorangegangenen Ansprüche, mit einem Schritt des Bereitstellens der überschüssigen Energiemenge an das Versorgungsnetz (225).

3. Verfahren gemäß einem der vorangegangenen Ansprüche, bei dem ansprechend auf das Ermitteln (105) der überschüssigen Energiemenge ein Steuersignal bereitgestellt wird, das ausgebildet ist, um den Energiespeicher (331) abhängig von der ermittelten Energiemenge in einen Ladezustand oder einen Entladezustand zu versetzen.

4. Verfahren gemäß einem der vorangegangenen Ansprüche, bei dem die Information über die bevorstehende Nutzung eine Abfahrtzeit einer bevorstehenden Fahrt umfasst.

5. Verfahren gemäß Anspruch 4, mit einem Schritt des Ermittelns einer minimalen Energiemenge, die um eine Differenzmenge kleiner als die benötigte Energiemenge ist und an das Versorgungsnetz bereitgestellt wird, wobei die minimale Energiemenge so ermittelt wird, das dem Energiespeicher die Differenzmenge bis zur Abfahrtzeit wieder zugeführt werden kann.

6. Vorrichtung zum Ermitteln einer überschüssigen Energiemenge eines elektrischen Energiespeichers (331) eines Fahrzeugs (221), die einem Versorgungsnetz (225) zur Verfügung gestellt werden kann, das die folgenden Merkmale umfasst:
einer Einrichtung (335) zum Ermitteln einer aktuellen Energiemenge des Energiespeichers;
einer Einrichtung (339) zum Ermitteln einer für eine bevorstehende Nutzung des Fahrzeugs benötigten Energiemenge, ansprechend auf eine Information über die bevorstehende Nutzung, **dadurch gekennzeichnet, dass** die Information über die bevorstehende Nutzung von einem Fahrzeugnavigationssystem (341) bereitgestellt wird, das ausgebildet ist, um unter Verwendung einer digitalen Karte, einer eingegebenen Startinformation und einer eingegebenen Zielinformation einer oder mehrere bevorstehenden Fahrten, die für die bevorstehende Nutzung benötigten Energiemenge zu ermitteln und mit der Information über die bevorstehende Nutzung bereitzustellen, und dass eine Einrichtung (337) zum Ermitteln der überschüssigen Energiemenge des Energiespeichers, basierend auf der aktuellen Energiemenge und der benötigten Energiemenge, vorgesehen ist, wobei die überschüssige Energiemenge als Differenz zwischen der aktuellen Energiemenge und der benötigten Energiemenge ermittelt wird.

7. Computerprogrammprodukt mit Programmcode, der auf einem maschinenlesbaren Träger gespeichert ist, zur Durchführung des Verfahrens nach einem der Ansprüche 1 bis 5, wenn das Programm auf einem Steuergerät ausgeführt wird.

## Claims

1. Method for determining an excess quantity of energy of an electrical energy storage device (331) of a vehicle (221), which quantity of energy can be made available to a supply network (225), which method comprises the following steps:
determining (101) a current quantity of energy of the energy storage device;
determining (103) a quantity of energy which is required for imminent use of the vehicle, in response to information about the imminent use, **characterized in that** the information about the imminent use is made available by a vehicle navigation system (341) which is designed to determine the quantity of energy required for the imminent use using a digital map, an item of input starting information and an item of input destination information for one or more imminent journeys, and to make available said quantity of energy with the information about the imminent use, wherein in a determining step (105) the excess quantity of energy of the energy storage device is determined on the basis of the current quantity of energy and the required quantity of energy, wherein the excess quantity of energy is determined as a difference between the current quantity of energy and the required quantity of energy.

2. Method according to one of the preceding claims, having a step of making available the excess quantity of energy to the supply network (225).

3. Method according to one of the preceding claims, in which in response to the determining (105) of the excess quantity of energy a control signal is made available which is designed to place the energy storage device (331) in a state of charge or a state of discharge depending on the determined quantity of energy.

4. Method according to one of the preceding claims, in which the information about the imminent use comprises a departure time for an imminent journey.

5. Method according to Claim 4, having a step of determining a minimum quantity of energy which is smaller than the required quantity of energy by a differential quantity, and is made available to the supply network, wherein the minimum quantity of energy is determined in such a way that the differential quantity can be fed back to the energy storage device up to the departure time.

6. Device for determining an excess quantity of energy of an electrical energy storage device (331) of a vehicle (221), which quantity of energy can be made available to a supply network (225), which comprises the following features:
an apparatus (335) for determining a current quantity of energy of the energy storage device;
an apparatus (339) for determining a quantity of energy which is required for imminent use of the vehicle, in response to information about the imminent use, **characterized in that** the information about the imminent use is made available by a vehicle navigation system (341) which is designed to determine the quantity of energy required for the imminent use using a digital map, an item of input starting information and an item of input destination information for one or more imminent journeys, and to make available said quantity of energy with the information about the imminent use, and **in that** an apparatus (337) for determining the excess quantity of energy of the energy storage device on the basis of the current quantity of energy and the required quantity of energy is provided, wherein the excess quantity of energy is determined as a difference between the current quantity of energy and the required quantity of energy.

7. Computer program product having a program code which is stored on a machine-readable carrier, for carrying out the method according to one of Claims 1 to 5, when the program is run on a control device.

## Revendications

1. Procédé pour déterminer une quantité d'énergie excédentaire d'un accumulateur d'énergie électrique (331) d'un véhicule (221) qui peut être mise à disposition d'un réseau d'alimentation (225), comprenant les étapes suivantes :
détermination (101) d'une quantité d'énergie actuelle de l'accumulateur d'énergie ;
détermination (103) qu'une quantité d'énergie nécessaire pour une prochaine utilisation du véhicule, en réaction à une information à propos de la prochaine utilisation, **caractérisé en ce que** l'information à propos de la prochaine utilisation est fournie par un système de navigation de véhicule (341) qui est configuré pour, en utilisant une carte numérique, une information de départ saisie et une information de destination saisie d'un ou plusieurs prochains parcours, déterminer la quantité d'énergie nécessaire pour la prochaine utilisation et la fournir avec l'information à propos de la prochaine utilisation, la quantité d'énergie excédentaire de l'accumulateur d'énergie étant déterminée dans une étape de détermination (105) en se basant sur la quantité d'énergie actuelle et la quantité d'énergie nécessaire, la quantité d'énergie excédentaire étant déterminée en tant que différence entre la quantité d'énergie actuelle et la quantité d'énergie nécessaire.

2. Procédé selon l'une des revendications précédentes, comprenant une étape de fourniture de la quantité d'énergie excédentaire au réseau d'alimentation (225).

3. Procédé selon l'une des revendications précédentes, avec lequel un signal de commande est fourni en réaction à la détermination (105) de la quantité d'énergie excédentaire, lequel est configuré pour placer l'accumulateur d'énergie (331) dans un état de charge ou un état de décharge, suivant la quantité d'énergie déterminée.

4. Procédé selon l'une des revendications précédentes, avec lequel l'information à propos de la prochaine utilisation comprend un moment de départ d'un prochain parcours.

5. Procédé selon la revendication 4, comprenant une étape de détermination d'une quantité d'énergie minimale qui est inférieure d'une quantité différentielle à la quantité d'énergie nécessaire et qui est fournie au réseau d'alimentation, la quantité d'énergie minimale étant déterminée de telle sorte que la quantité différentielle peut de nouveau être acheminée à l'accumulateur d'énergie jusqu'au moment de départ.

6. Arrangement pour déterminer une quantité d'énergie excédentaire d'un accumulateur d'énergie électrique (331) d'un véhicule (221) qui peut être mise à disposition d'un réseau d'alimentation (225), comprenant les caractéristiques suivantes :
un dispositif (335) destiné à déterminer une quantité d'énergie actuelle de l'accumulateur d'énergie ;
un dispositif (339) destiné à déterminer une quantité d'énergie nécessaire pour une prochaine utilisation du véhicule, en réaction à une information à propos de la prochaine utilisation, **caractérisé en ce que** l'information à propos de la prochaine utilisation est fournie par un système de navigation de véhicule (341) qui est configuré pour, en utilisant une carte numérique, une information de départ saisie et une information de destination saisie d'un ou plusieurs prochains parcours, déterminer la quantité d'énergie nécessaire pour la prochaine utilisation et la fournir avec l'information à propos de la prochaine utilisation, et **en ce qu'**un dispositif (337) destiné à déterminer la quantité d'énergie excédentaire de l'accumulateur d'énergie en se basant sur la quantité d'énergie actuelle et la quantité d'énergie nécessaire est présent, la quantité d'énergie excédentaire étant déterminée en tant que différence entre la quantité d'énergie actuelle et la quantité d'énergie nécessaire.

7. Produit de programme informatique comprenant un code de programme, qui est enregistré sur un support lisible par machine, destiné à mettre en œuvre le procédé selon l'une des revendications 1 à 5 lorsque le programme est .exécuté sur un contrôleur.
